(19) Europäisches Patentamt
European Patent Office
Office européen des brevets

(11) Veröffentlichungsnummer: **0 310 971 B1**

(12) # EUROPÄISCHE PATENTSCHRIFT

(45) Veröffentlichungstag der Patentschrift: **08.07.92**

(51) Int. Cl.$^5$: **C09D 5/44**

(21) Anmeldenummer: **88116262.2**

(22) Anmeldetag: **30.09.88**

(54) **Kathodisch adscheidbares wässriges Elektrotauchlack-überzugsmittel und dessen Verwendung.**

(30) Priorität: **03.10.87 DE 3733552**

(43) Veröffentlichungstag der Anmeldung:
**12.04.89 Patentblatt 89/15**

(45) Bekanntmachung des Hinweises auf die Patenterteilung:
**08.07.92 Patentblatt 92/28**

(84) Benannte Vertragsstaaten:
**DE ES FR GB IT NL SE**

(56) Entgegenhaltungen:
**EP-A- 0 208 867**
**EP-A- 0 212 633**
**EP-A- 0 220 440**
**EP-A- 0 224 158**

(73) Patentinhaber: **Herberts Gesellschaft mit beschränkter Haftung**
**Christbusch 25**
**W-5600 Wuppertal 2(DE)**

Patentinhaber: **HOECHST AKTIENGESELLSCHAFT**
**Postfach 80 03 20**
**W-6230 Frankfurt am Main 80(DE)**

(72) Erfinder: **Saatweber, Dietrich, Dr.**
**Forststrasse 22**
**W-5600 Wuppertal 21(DE)**
Erfinder: **Hendrikx, Georg, Dr.**
**Nordrather Strasse 76**
**W-5620 Velbert 15(DE)**
Erfinder: **Brindöpke, Gerhard, Dr.**
**Lorelei Strasse 18**
**W-6230 Frankfurt 80(DE)**
Erfinder: **Plum, Helmut, Dr.**
**Nibelungen Strasse 3**
**W-6204 Taunusstein(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Vorteile der kathodischen Elektrotauchlackierung (KTL) sind in der Fachliteratur und in Patentschriften beschrieben (Metalloberfläche 31 (1977) 10, Seite 455-459, EP-A-4 090, AT-C-3 46 989, US-A-39 22 253, EP-B-66 859).

Ein Nachteil der beschriebenen Systeme ist die Anwendung relativ hoher Einbrenntemperaturen von ca. 170 ° C, wodurch ein hoher Aufwand an Heizenergie benötigt wird. In der Autoindustrie, die der Hauptanwender des KTL-Verfahrens ist, werden durch diese hohen Einbrenntemperaturen der Einbau von Kunststoffteilen in die Autokarosserien vor der Grundierung verhindert und z.T. die Schmelztemperaturen von Lötverbindungen erreicht.

Daher müssen die Anbieter von KTL-Systemen solche Materialien herstellen können, mit welchen bei niedrigeren Einbrenntemperaturen (low bake) die bisherigen guten Eigenschaften der Grundierungen nicht verschlechtert werden.

In der US-A- 44 35 559 werden ß-Hydroxyurethane als Vernetzungsmittel für KTL-Systeme mit niedriger Einbrenntemperatur genannt. Bei 250 ° F (121 ° C) wird eine als "appreciable" bezeichnete Härtung erreicht (Spalte 6, Zeile 12-13). Erst bei 325 ° F (163 ° C) ist die Härtung "excellent" und damit brauchbar für Autokarossen. Ein weiterer Nach-teil ist der Umgang mit großen Mengen giftiger Isocyanate bei der Herstellung dieser Lacksysteme.

In EP-A-1 25 577 wird die Härtung bei niedrigeren Einbrenntemperaturen durch Kombination von Oniumgruppen enthaltenden Polymeren mit speziellen Aminoharzen erreicht, allerdings unter Verschlechterung der Korrosionsschutzeigenschaften.

Für die Ansprüche der Autoindustrie unzureichende Korrosionsschutzergebnisse werden bei Einbrenntemperaturen unter 160 ° C auch mit den Systemen aus DE-A-32 46 812 und DE-A-33 28 455 erzielt.

DE-A-32 46 812 beschreibt härtbare, kationische Modifizierungsprodukte von Epoxidharzen, welche ß-Hydroxyalkylcarbamidestergruppen enthalten, während DE-A-33 28 455 von Aminosäure-Salzaddukten mit urethanisierten Aminogruppen ausgeht.

In DE-A-33 24 211 und DE-A-33 15 469 werden Michael-Additionsprodukte von zur Michael-Addition befähigten Mono- oder Dicarbonsäureestern an Verbindungen, die zur Michael-Addition befähigte Doppelbindungen enthalten, zur Vernetzung mit hydroxylgruppenhaltigen Kunstharzen, z.B. mit KTL-Trägerharzen, kombiniert.

Als Einbrennbedingungen werden 130 bis 200 ° C über eine Zeitdauer von 10 bis 60 Minuten, bevorzugt 150 bis 180 ° C während 15 bis 30 Minuten genannt. In den Beispielen liegen die Einbrenntemperaturen zwischen 150 und 200 ° C. Unterhalb 150 ° C eingebrannte Beschichtungen von 16 bis 18 µm Schichtdicke erfüllen nicht die Ansprüche der Autoindustrie z.B. hinsichtlich guter mechanischer Eigenschaften, ausreichender Belastungsdauer in der Salzsprühkammer nach ASTM B 117/6 oder DIN 50 021 und guter Freibewitterungsresistenz.

DE-A-35 30 179 beschreibt die Vernetzung von KTL-Trägerharzen, welche end- oder seitenständige Doppelbindungen sowie reaktive Hydroxylgruppen enthalten, mit Michael-Additionsprodukten von zur Michael-Addition befähigten Mono- oder Dicarbonsäuren an geeignete doppelbindungshaltige Verbindungen. Bei Einbrennbedingungen von praktisch 60 Minuten 120 ° C werden korrosionsfeste und widerstandsfähige Beschichtungen erhalten.

Auch die EP-A-208 867, in welcher die Vernetzung von KTL-Trägerharzen, die reaktive Hydroxylgruppen tragen, mit Komponenten aus den Reaktionsprodukten von Diisocyanat mit CH-aktiven Alkylestern und Polyaminen als Umesterungsreaktion angesehen wird, läßt Überzüge mit ausreichenden Eigenschaften erst ab 120 ° C Einbrenntemperatur erwarten.

Es war die Aufgabe dieser Erfindung, die Anwendung noch niedrigerer Einbrenntemperaturen in der Praxis zu ermöglichen und die Nachteile der genannten Verfahren zu vermeiden.

Gegenstand der Erfindung ist ein kathodisch abscheidbares, wäßriges Elektrotauchlack-Überzugsmittel, das ein oder mehrere Kunstharz-Bindemittel mit tertiären Aminogruppen und gegebenenfalls quaternären Ammoniumhydroxidgruppen enthält, welche durch Protonisieren mit Säuren wasserlöslich gemacht werden können, und das gegebenenfalls Pigmente, Korrosionsinhibitoren, Antikratermittel, Lackhilfsmittel, Lackbindemittel, Weichmacher, Katalysatoren und organische Lösungsmittel enthält, und das als Kunstharz-Bindemittel enthält:

(A) 90 bis 50 % Massenanteil, bezogen auf den Gesamtanteil des Kunstharz-Bindemittels, von einem oder mehreren Polykondensations-, Polymerisations- und/oder Polyadditionsharzen, wobei das Harz oder im Falle des Vorliegens mehrerer Harze deren Gemisch

a) eine zahlenmittlere Molmasse (Mn) von 700 bis 10000 hat,

b) 1,2 . $10^{23}$ bis 21,7 . $10^{23}$ seiten- oder endständige Doppelbindungen pro 1000 g enthält,

entsprechend einer Hydrierjodzahl von 5 bis 90,

c) gegebenenfalls primäre und/oder sekundäre Hydroxylgruppen enthält, entsprechend einer Hydroxylzahl von 0 bis 450 mg KOH/g Harz, und

d) tertiäre Aminogruppen entsprechend einer Aminzahl von 30 bis 450 mg KOH/g Harz aufweist,

(B) 10 bis 50 % Massenanteil eines oder mehrerer Vernetzungsmittel, die Verbindungen mit Methantricarbonsäureamideinheiten der Formel

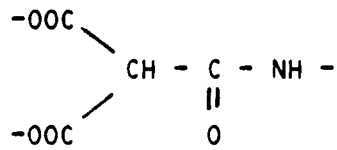

sind, die im Molekül durchschnittlich mindestens 2 Gruppen mit aktiven H-Atomen enthalten und von einem Umsetzungsprodukt eines Mono- oder Polyisocyanates mit einem Malonsäurederivat abgeleitet sind, und

(C) 0 bis 10 % Massenanteil eines oder mehrerer verkappter Di- und/oder Polyisocyanate.

Das Vernetzungsmittel B) wird in der DE-A-35 41 140 als Härtungskomponente eines Zweikomponentenlackes beschrieben. Die Komponenten werden dort getrennt gelagert und kurz vor dem Gebrauch vermischt. Nach dem Mischen muß der Lack innerhalb der Topfzeit, d.h. weniger als 15 Stunden, verarbeitet werden. Für Elektrotauchlacke sind die bekannten Zweikomponentenlacke daher praktisch nicht geeignet.

Es wurde jedoch überraschend festgestellt, daß das erfindungsgemäße kathodische Elektrotauchlack-(CED)Bad über mehrere Monate stabil ist und eine ausreichende Vernetzung der Beschichtungen schon ab 100 °C in 15 Minuten erreicht wird. Ein weiterer Vorteil neben der Vernetzung bei niedrigen Einbrenntemperaturen ist die Möglichkeit, mit einer Teilneutralisierung des CED-Bindemittels für die Zubereitung des CED-Bades auskommen zu können und keine Vollneutralisierung zur Vermeidung des katalytischen Effektes der Aminoverbindung bei Raumtemperatur anwenden zu müssen.

Die Bindemittel der Komponente (A) sind durch Polymerisation, Polyaddition und/oder Polykondensation herstellbare Kunstharze, die tertiäre Aminogruppen und end- oder seitenständige Doppelbindungen tragen, wie sie z.B. in den deutschen Offenlegungsschriften 27 07 405, 27 07 482, 27 32 874, 27 32 955, 27 49 776, 27 52 255, 27 52 256, 27 53 681 und 27 56 808 beschrieben werden.

Amin-epoxidharze mit end- oder seitenständigen Doppelbindungen sind besonders geeignete Bindemittel. Sie werden zweckmäßig aus Polyglycidylethern mit durchschnittlich zwei oder mehr 1,2-Epoxidgruppen pro Molekül erhalten.

Diese Polyglycidylether können hergestellt werden durch

1) Einführen von Glycidylgruppen in alkalischem Medium über z.B. Epichlorhydrin,

aa) in aliphatische, cycloaliphatische oder aromatische OH-funktionelle Harze, z.B. Epoxinovolake, unter Bildung von Polyglycidylethern,

ab) in aliphatische, cycloaliphatische oder aromatische COOH-funktionelle Harze unter Bildung von Polyglycidylestern, oder

ac) in aliphatische, cycloaliphatische oder aromatische $NH_2$-funktionelle Harze unter Bildung von Polyglycidylaminen,

2) Einpolymerisieren von ungesättigten Glycidylmonomeren wie Glycidyl (meth)acrylat, N-Glycidyl-(meth)acrylamid oder Allylglycidylether in Acryltopolymerisate.

Besonders bevorzugt gemäß 1) ist, daß die 1.2-epoxidgruppenhaltigen Harze Polyglycidylether der allgemeinen Formel sind

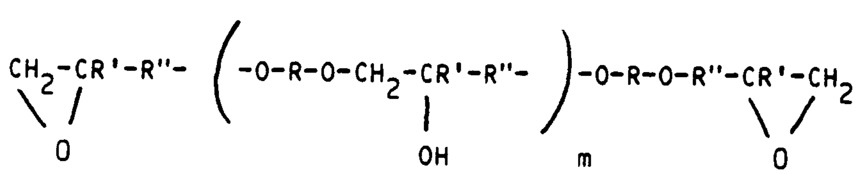

worin bedeuten

R = 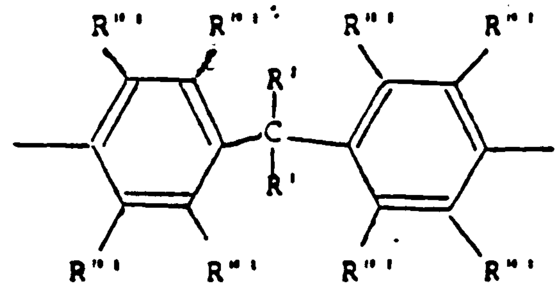

$R' =$ Wasserstoff oder $-C_nH_{2n+1}$
$R'' =$ $-(CR'_2)_n-$
$R''' =$ $R'$ oder Halogen, bevorzugt Wasserstoff
m = 0 bis 6
n = 1 bis 3

Sie haben ein mittleres Molekulargewicht (Mn) von etwa 300 bis 2000 und ein Epoxiäquivalentgewicht von etwa 170 bis 1500. Solche Harze sind Umsetzungsprodukte von Epichlorhydrin mit Dioxi-diphenylmethan (Bisphenol F) oder Dioxi-diphenylpropan (Bisphenol A). Es können auch entsprechende heterocyclische Polyepoxiverbindungen verwendet werden, wie 1.3-Diglycidyl-5.5-dimethylhydantioin, Triglycidylisocyanurat oder Diepoxide aus Bisimiden.

Bevorzugt gemäß 2) ist, daß die epoxigruppenhaltigen Harze Glycidyl (meth)acrylat-Copolymere sind, die durch Copolymerisation von Glycidylmethacrylat mit ungesättigten Monomeren erhalten wurden. Ungesättigte Monomere sind Styrol, Vinyltoluol, (Meth)acrylsäureester verschiedener Kettenlänge, wobei die Methacrylsäureester bevorzugt lineare oder verzweigte $C_1$ bis $C_4$-Alkohole und die Acrylsäureester bevorzugt lineare oder verzweigte $C_2$ bis $C_8$-Alkohole enthalten. Die Einführung der Aminogruppen kann entweder durch Copolymerisation mit ungesättigten Aminen wie Dialkyl-aminoalkyl-(meth)acrylaten, entsprechenden Acrylamiden oder N-Vinylimidazol, oder durch Reaktion von vorzugsweise sekundären Aminen oder Aminoalkoholen mit den Epoxigruppen erfolgen.

Das Einführen der Aminogruppen in die Komponente (A) erfolgt entweder durch Addition von NH-reaktiven Verbindungen an die Epoxigruppe oder durch Umsetzung der Hydroxylgruppen des Grundharzes mit basischen Monoisocyanaten, die durch Reaktion von aromatischen und/oder aliphatischen und/oder cycloaliphatischen Di- oder Polyisocyanaten mit einem Dialkylaminoalkanol /vgl. DE-A-27 07 404) entstehen.

Als NH-reaktive Verbindungen werden beispielsweise verwendet primäre Monoalkylamine wie Dialkylaminoalkylamin und/oder bevorzugt sekundäre Monoamine wie Dialkylamine, Monoalkylhydroxialkylamine oder Dihydroxialkylamine. Beispiele für einsetzbare Verbindungen sind Diethylamin, Dimethylaminopropylamin, N-Methylaminoethanol oder Diethanolamin. Bei Verwendung von primären Aminen oder sekundären Diaminen tritt eine Kettenverlängerung ein, z.B. bei Einsatz von Additionsprodukten von Hexandiamin-l.6 mit 2 Mol Glycidylester der Versaticsäure.

Unter end- oder seitenständigen Doppelbindungen werden hier aktivierte endständige Doppelbindungen in Haupt- und Seitenketten verstanden.

Es sind dies in der Komponente (A) insbesondere zur Michael-Addition geeeignete Doppelbindungen.

Das Einführen der end- oder seitenständigen Doppelbindungen in die Komponente (A) erfolgt entweder direkt durch Addition von z.B. (Meth)Acrylsäure oder Hydroxyalkyl(meth)acrylat enthaltenden Halbestern an die Epoxidgruppe oder indirekt durch Umsetzung der Hydroxylgruppe des Grundharzes mit ungesättigten Monoisocyanaten, die durch Reaktion von aromatischen und/oder aliphatischen und/oder cycloaliphatischen Di- oder Polyisocyanaten mit $\alpha$, $\beta$-ungesättigten Monocarbonsäuren oder entsprechenden Carbonsäureamiden, wie Hydroxyalkyl(meth)acrylaten oder Dicarbonsäureestern von Hydroxyalkyl(meth)acrylaten erhalten werden.

Die direkte Addition an die Epoxidgruppe kann beispielsweise auch mit ungesättigtem Amin, z.B. Diallylamin, erfolgen. Auf diese Weise kann die Doppelbindung gleichzeitig mit der Aminogruppe eingeführt werden. Die Aminogruppe kann, falls erforderlich, anschließend in eine tertiäre Aminogruppe umgewandelt werden.

Eine andere Herstellungsweise ist die Umetherung mit einem veretherten methylolierten (Meth)-acrylamid, z.B. Methylolacrylamid-monobutylether, wie sie in der DE-A-29 34 467 beschrieben ist.

Das ungesättigte Amin-epoxidharz der Komponente A kann gegebenenfalls durch Einsatz entsprechender gesättigter Verbindungen modifiziert werden, um optimale technische Eigenschaften zu erreichen. Wird ein Gemisch von ungesättigtem Amin-epoxidharz mit gesättigtem Amin-epoxidharz verwendet, müssen die

oben angegebenen Kennzahlen für Molmasse, Hydrierjodzahl und Aminzahl für das Gemisch eingehalten werden.

Das Bindemittel der Komponente (A) hat eine zahlenmittlere Molmasse (Mn) von 700 bis 10000, bevorzugt 1000 bis 5000. Es enthält mindestens eine tertiäre Aminogruppe pro Molekül. Es können in den Molekülen auch quaternäre Ammoniumgruppen, unabhängig von den tertiären Aminogruppen vorhanden sein.

Die untere Grenze der Aminzahl (bezogen auf tertiäres Amin) sollte bevorzugt 50, besonders bevorzugt 70, die obere Grenze dagegen sollte bevorzugt 120, besonders bevorzugt 100 sein. Ist die Aminzahl zu niedrig, so ist die Löslichkeit zu gering oder es entstehen durch einen zu hohen Neutralisierungsgrad zu niedrige pH-Werte in den Abscheidungsbädern. Ist die Aminzahl zu hoch, so entsteht eine schlecht haftende Beschichtung bei der Abscheidung oder eine blasige Oberfläche. Besonders geeignet als Bindemittel der Komponente (A) sind Aminepoxidharze aus Bisphenol A-, Bisphenol F- Polyglycidylethern und Epoxinovolaken sowie aus (Meth)Acrylpolymerisaten, welche unter Verwendung von ungesättigten Glycidylmonomeren wie Glycidyl(meth)acrylat, N-Glycidyl(meth)acrylamid oder Allylglycidylether hergestellt werden. Die Aminogruppen entstehen entweder durch Addition von NH-reaktiven Verbindungen an die Epoxidgruppen oder durch Umsetzung der Hydroxylgruppen des Grundharzes mit basischen Monoisocyanaten, erhältlich durch Reaktion von aromatischen und/oder aliphatischen und/oder cycloaliphatischen Di- oder Polyisocyanaten mit einem Dialkylaminoalkanol, wie in DE-A-27 07 405 beschrieben. Die Einführung der Aminogruppen kann wie in DE-A-27 07 405 beschrieben erfolgen.

Vorteilhaft für die Zwischenhaftung (intercoat adhesion) ist ein Einbau von substituierten Harnstoffgruppen in Komponente (A) und/oder (B), wie sie z.B. durch Reaktion von Polyisocyanat oder verkapptem Polyisocyanat in das Molekül eingeführt werden können.

Geeignete Verbindungen der Komponente (B) sind beispielsweise Umsetzungsprodukte von Malonsäurediester wie Malonsäuredimethyl-, diethyl-, dibutyl-, dipentylester mit Mono- oder Polyisocyanaten.

Beispiele für derartige, erfindungsgemäß einsetzbaren Isocyanate sind aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat, Polyisocyanate wie Tetramethylendiisocyanat, Hexamethylendiisocyanat, 2.2.4-Trimethylhexamethylendiisocyanat, 1.12-Dodecandiisocyanat, Cyclohexan-1.3 und 1.4-diisocyanat, 1-Isocyanato3,3,5-trimethyl-5--isocyanatomethylcyclohexan(=Isophorondiisocyanat IPDI), Perhydro-2,4′- und/oder 4,4′-diphenylmethandiisocyanat, 1,3-und 1,4-Phenylendiisocyanat, 2,4- und 2,6-Toluylendiisocyanat, Diphenylmethan-2,4′- und/oder 4,4′-diisocyanat, 3,2′- und/oder 3,4-Diisocyanato-4-methyl-diphenylmethan, Naphthylen-l,5-diisocyanat, Triphenylmethan-4,4′-4″-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophonatgruppen, Isocyanuratgruppen, Urethangruppen, acylierte Harnstoffgruppen und Biuretgruppen aufweisende Polyisocyanate.

Besonders gut für das erfindungsgemäße Verfahren geeignet sind die bekannten Polyisocyanate, die hauptsächlich bei der Herstellung von Lacken eingesetzt werden, z.B. Biuret-, Isocyanurat- oder Urethangruppen-aufweisende Modifizierungsprodukte der obengenannten einfachen Polyisocyanate, insbesondere Tris-(6-isocyanatohexyl)-biuret oder niedermolekulare, Urethangruppen aufweisende Polyisocyanate, wie sie durch Umsetzung von im Überschuß eingesetztem IPDI mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständigen Isocyanatgruppen aufweisende Präpolymere, wie sie insbesondere durch Umsetzung der obengenannten einfachen Polyisocyanate, vor allem Diisocyanate mit unterschüssigen Mengen an organischen Verbindungen mit minestens zwei gegenüber Isocyanatgruppen reaktionsfähigen Gruppen zugänglich sind. Als solche kommen insbesondere insgesamt mindestens zwei Aminogruppen und/oder Hydroxylgruppen aufweisende Verbindungen des Molekulargewichtsbereiches 300 bis 10000, vorzugsweise 400 bis 6000 zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltige Acrylatharze verwendet.

In diesen bekannten Präpolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren a) eine mittlere

NCO-Funktionalität von 2 bis 4, vorzugsweise von 2 bis 3 und b) ein mittleres Molekulargewicht von 500 bis 10000, vorzugsweise von 800 bis 4000 aufweisen.

Als Verbindung B) eignen sich aber auch Umsetzungsprodukte von Estern und Teilestern mehrwertiger Alkohole der Malonsäure mit Monoisocyanaten. Mehrwertige Alkohole sind z.B. zwei bis fünfwertige Alkohole wie Ethandiol, die verschiedenen Propan-, Butan-, Pentan- und Hexandiole, Polyethylen- und Polypropylendiole, Glycerin, Trimethylolethan und -propan, Pentaerythrit, Hexantriol und Sorbit.

Geeignet sind auch die entsprechenden Malonester von OH-Gruppen enthaltenden Acrylharzen, Polyestern, Polyethern, Polyesteramide und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische der Verbindungen mit Methancarbonsäureamideinheiten mit den angeführten Malonestern mehrwertiger Alkohole.

Als Komponente C können 0 bis 10 % Massenanteil verkappte Di- und/oder Polyisocyanate dem erfindungsgemäßen Überzugsmittel zugesetzt werden. Bevorzugt werden solche Di- und/oder Polyisocyanate verwendet, die in dem System bei den angewendeten Einbrenntemperaturen entkappt werden. Da das erfindungsgemäße Überzugsmittel bei sehr niedrigen Temperaturen eingebrannt werden kann, wird bevorzugt ein Di- und/oder Polyisocyanat eingesetzt, das ebenfalls bei diesen niedrigen Einbrenntemperaturen, beispielsweise unter 140 °C entkappt wird. Derartige Di- und Polyisocyanate sind Handelsprodukte und dem Fachmann geläufig.

Die gegebenenfalls mitverwendbaren verkappten oder blockierten Di-und/oder Polyisocyanate (Komponente C), werden z.B. in Farbe und Lack, 89. Jhrg., 12, 1983, Seite 928-934 beschrieben. Die einsetzbaren verkappten oder blockierten Di- oder Polyisocyanate sind gegenüber den funktionellen Gruppen der anderen Komponenten und Wasser bei Raumtemperatur beständig. Sie können jedoch beim Einbrennen mit den entsprechenden funktionellen Gruppen der anderen Komponenten reagieren. Typische Beispiele von geeigneten Isocyanaten sind aliphatische Diisocyanate, wie Trimethylen-, Tetramethylen-, Hexamethylen- und Trimethylhexamethylendiisocyanat; cycloaliphatische Diisocyanate wie 1,4-Cyclohexan-, 1,2-Cyclohexandiisocyanat und 3-Isocyanatomethyl-3,5,5-trimethylcyclohexylisocyanat; aromatische Isocyanate wie m-Phenylen- und 1,4-Naphthalindiisocyanat; aliphatisch-aromatische Isocyanate wie 4,4-Diphenylenmethan-, 2,4- und 2,6-Toluylendiisocyanat oder Gemische davon. Bevorzugt sind verkappte Prepolymere der Diisocyanate, zu deren Prepolymerherstellung Polyole, wie z.B. Trimethylolpropan, und/oder Polyamine, wie z.B. Diethylentriamin, verwendet werden.

Als Blockierungs- oder Verkappungsmittel können Alkohole, Phenole, Thioalkohole, Thiophenole, Oxime, Hydroxamsäureester, Hydroxylalkyl(meth)-acrylate, Alkanolamine wie Dimethylethanolamin, Diethanolamin, u.a. Amine, Amide, Imide und/oder $\beta$-Dicarbonylverbindungen verwendet werden.

Eine weitere Herstellungsmöglichkeit von verkappten oder blockierten Isocyanaten liegt in der Umsetzung von Di- oder Polyaminen mit Alkylencarbonaten, wodurch $\beta$-Hydroxyurethane entstehen. In der DE-A-32 46 812, Seite 3, Zeile 29 bis Seite 4, Zeile 8, werden diese Reaktionen beschrieben. Gemäß der DE-A-32 46 812 werden die Polyamine nur partiell mit Alkylencarbonat umgesetzt. Es ist jedoch für den Fachmann selbstverständlich daß z.B. alle 3 Aminogruppen des Diethylentriaminmoleküls mit Alkylencarbonat, z.B. Propylencarbonat, umgesetzt werden können. Besonders bevorzugt sind für die vorliegende Erfindung verkappte Prepolymere aus aliphatischem Triol, aliphatisch-aromatischem Diisocyanat und aliphatischem Ketoxim.

Die Mitverwendung des Di- und/oder Polyisocyanats in dem erfindungsgemäßen Überzugsmittel ist nicht unbedingt erforderlich. Eine Verwendung der Komponenten A und B allein führt zu ausgezeichneten Überzügen mit einwandfreier Oberfläche und hervorragender Korrosionsschutzwirkung. Es ist daher möglich, die erfindungsgemäßen Überzugsmittel allein auf der Basis der Komponenten A und B zu formulieren. Der mögliche Zusatz des verkappten Di- und/oder Polyisocyanats führt jedoch zu weiter verbesserten Verlaufseigenschaften, wodurch sich eine besonders günstige Oberfläche ergibt; darüber hinaus wird durch diesen möglichen Zusatz die Korrosionsinhibierung verbessert.

Durch Protonisieren mit den bekannten Säuren wird das erfindungsgemäße kationische Bindemittel in an sich bekannter Weise wasserdispergierbar gemacht.

Nach dem Abscheiden des erfindungsgemäßen Überzugsmittels in üblicher Weise im Elektrotauchbad erfolgt die Härtung der erhaltenen Überzüge durch Einbrennen. Der Zusatz von Katalysatoren ist nicht erforderlich, da das im erfindungsgemäßen Überzugsmittel enthaltende Bindemittel A selbst katalytisch wirkt. Es ist jedoch möglich, Katalysatoren mitzuverwenden, die im Verlauf der Herstellung des Abscheidebades bzw. seiner Komponenten in üblicher Weise zugesetzt werden können. Beispiele hierfür sind katalysierende Bleiverbindungen, z.B. Bleioctat, basisches Bleisilikat, 1,4-Diazabicyclo-(2,2,2)-octan (DABCO), Amidine, z.B. N,N,N,N-Tetramethylguanidin, 1,8-Diazabicyclo-(5,4,0)-undec-7-en, 1,4-Diaza-bicyclo(4,3,0)-non-5-en sowie weitere der Fachwelt für die Härtungsreaktion bekannte Katalysatoren, wenn sie sich ohne Nachteile in das System einfügen.

Für das erfindungsgemäße Elektrotauchlack-Überzugsmittel können alle verwendbaren Pigmente benutzt werden. Unter den Begriff "Pigmente" fallen hierzu auch die Füllstoffe (extender), Aluminiumbronzen und dergleichen. Die Verwendbarkeit eines Pigmentes hängt nicht von seiner Wanderungsrichtung im elektrischen Feld ab, da der Abscheidungsvorgang bei Elektrotauchlackierung durch die Koagulation des Elektrotauchlack-Bindemittels ausgelöst wird, wie in den Fachaufsätzen "Zum Mechanismus der elektrophoretischen Lackierung" von Dr. Fritz Beck, Farbe und Lack, 72. Jahrgang, Nr. 3, 1966, Seite 218 bis 224 und "Betrachtungen und Versuche zur Elektrotauchlackierung" von Dr. F. Beck, Dr. H. Pohlemann und Dr. H. Spoor, Farbe und Lack, 73. Jahrgang, Nr. 4/1967, Seite 298 bis 310 zu lesen ist. Nichtionische Bindemittel wie z.B. Weichmacher (Dibutylphthalat und andere Phthalsäureester), Weichmacherharze, Cumaron-Inden-Harze, Inden-Harze, Kohlenwasserstoffharze und die entsprechenden Öle (z.B. Cumaron-Inden-Öl) können, soweit sie sich über Erst- und Nachfüllmaterial in das kathodische Elektrotauchlackbad einemulgieren lassen, zur Verbesserung spezieller Eigenschaften zugesetzt werden.

Zusatzstoffe Wie Verlaufmittel, Antikratermittel, Antischaummittel, Lösungsmittel usw. können in bekannter Art und Weise ausgewählt und zugesetzt werden.

Die metallisch leitenden Werkstücke werden in bekannter Weise mit dem erfindungsgemäßen Elektrotauchlack-überzugsmittel kathodisch beschichtet und bevorzugt bei Temperaturen von 100 bis 140 °C über einen Zeitraum von 15 bis 60 Minuten eingebrannt. Selbstverständlich führt die Anwendung höherer Temperaturen, wie sie im Stand der Technik üblich sind, z.B. bis 180 °C auch zu guten Ergebnissen.

Die Höhe der Schichtdicke, welche zu erreichen ist, kann z.B. durch Beschichtungsbedingungen, Bindemittel, Neutralisationsgrad, Lösungsmittelart und -menge und Art des Substrats beeinflußt werden. Es sind Schichtdicken möglich, wie sie nach dem Stand der Technik erreichbar sind, z.B. mit Trockenfilmdicke bis 60 µm und mehr bei einwandfreier Oberfläche und hervorragendem Umgriff z.B. auf zinkphosphatiertem Stahl.

Die Parameter für die Schichtdickenerhöhung sind die gleichen, wie sie für die anodische Elektrotauchlackierung bereits bekannt waren. Unter der Voraussetzung, daß sich ein geschlossener Film bei der Abscheidung bildet, der isolierend wirkt, findet eine Schichtdickenerhöhung mit steigender Spannung und steigender Badtemperatur statt. Auch die Länge der Beschichtungsdauer kann bis zu einer sich einstellenden Grenze eine Schichtdickenerhöhung bewirken. Das niedrigermolekulare Bindemittel oder das Bindemittel mit niedrigerer Glasübergangstemperatur führen zu höherer Schichtdicke als das chemisch gleiche Bindemittel mit höherer Molmasse oder höherem Tg.

Für höhere Schichtdicke ist ein niedriges Abscheideäquivalent eine günstige Voraussetzung.

Bei der Auswahl von Lösungsmitteln zur Erreichung hoher Schichtdicke werden diejenigen bevorzugt, welche die Durchbruchspannung möglichst wenig herabsetzen, wie z.B. Hexylglykol (Ethylenglykolmonohexylether), 2,2,4-Trimethylpentandiol-1,3-monisobutyrat oder Phenoxypropanol.

Ein wesentlicher Vorteil des erfindungsgemäßen Überzugsmittels liegt in den günstigen niedrigen Einbrenntemperaturen, die z.B. ein Lackieren von Metallteilen zusammen mit wärmeempfindlichen Werkstoffen z.B. Kunststoffen oder Gummi oder Lötstellen ermöglichen.

Beispiele

Die Prozentangaben in den Beispielen beziehen sich auf Massenanteile.

Herstellung des Bindemittels

A1) Ungesättigtes Amin-epoxidharz

In einem Reaktionsgefäß, welches mit Rührer, Tropftrichter und Thermometer ausgestattet ist, werden 520 g eines Epoxidharzes auf Basis Bisphenol A (Epoxidäquivalentgewicht 260) in 453 g Ethylglykolacetat (Monoethylenglykolmonoethyletheracetat) bei 60 bis 70 °C gelöst, 0,2 g Hydrochinon und 536 g eines Halbesters aus 2 Mol Tetrahydrophthalsäureanhydridund 2 Mol Hydroxyethylacrylat zugegeben und die Temperatur auf 100 bis 110 °C gesteigert. Die Reaktion wird bei dieser Temperatur bis zu einer Säurezahl unter 5 mg KOH/g Festharz geführt. Anschließend wird das Reaktionsprodukt bei 60 bis 70 °C mit 750 g einer 70 %-igen Lösung eines Monoisocyanates aus 2 Mol Toluylendiisocyanat und 2 Mol Dimethylethanolamin in Ethylglykolacetat versetzt und bis zu einem NCO-Wert von praktisch Null reagiert.

| | |
|---|---|
| Festkörpergehalt<br>Hydrierjodzahl<br>Hydroxylwert* | 70 % (berechnet)<br>30 (Festharz)<br>0,06 (entsprechend einer Hydroxylzahl von 34 mg KOH/g Harz) |

* Mol Hydroxid/100 g Festharz

A2) Ungesättigtes Amin-Epoxidharz

528 g eines Epoxidharzes auf Basis Bisphenol A mit einem Epoxidäquivalentgewicht von 490 werden in 221 g Diethylenglykoldimethylether gelöst. Bei 60 °C werden 38,3 g Diethanolamin zugegeben und diese Lösung gehalten, bis 1,33 Milliäquivalente (Epoxid und Amin) pro Gramm Lösung titriert werden. Danach wird ein Gemisch von 18,6 g Dimethylaminopropylamin und 11,6 g eines Additionsproduktes aus 1 Mol Hexandiamin-l,6 und 2 Mol Glycidylester der Versaticsäure zugegeben und die exotherme Reaktion abgewartet. Anschließend eine Stunde bei 90 °C und dann 3 Stunden bei 120 °C halten.

Verdünnen mit 75 g Diethylenglykoldimethylether auf einen Festkörper (bestimmt durch 40 Minuten Einbrennen bei 180 °C) von 70 %.

Aminzahl: 88 mg KOH/g Harz
Viskosität: 513 mPas
(nach Verdünnen auf 50% mit Diethylenglykoldimethylether bei 25 °C)

945,5 g des vorstehend erhaltenen Vorproduktes werden mit 2 g Bleioctoat (31 % Blei), 2 g 4-Methyl-2,6-di-tert-butylphenol und 54,5 g Methylolacrylamid-mono-butylether gemischt und ansteigend von 100 bis 130 °C zum Schluß unter Anlegen eines leichten Vakuums 27,2 g n-Butanol abdestilliert.

Festkörper: 77,8 % (40 Minuten 180 °C)
Hydrierjodzahl: 12 (Festharz)
Aminzahl: 87 mg KOH/g Festharz
Viskosität: 740 mPas
(nach Verdünnen auf 50 % mit Diethylenglykol-dimethylether bei 25 °C)

A3) Gemisch aus gesättigtem und ungesättigtem Amin-epoxidharz

a) Gesättigtes Amin-epoxidharz

Gemäß EP-A1-12463, Seite 17, Beispiel (b) werden 391 g Diethanolamin, 189 g 3-(N,N-Dimethylamino)-propylamin und 1147 g eines Adduktes aus 1,6-Diaminohexan und Versaticsäureglycidylester (Handelsprodukt) Cardura E 10 Molverhältnis 1:2) zu 5274 g Epoxidharz auf Basis Bisphenol A (Epoxid-Äquivalentgewicht ca. 472) in 2999 g Ethylenglykolmonoethylether gegeben.
Die Mischung wird 4 Stunden lang unter Rühren bei 85 bis 90 °C und dann eine Stunde lang bei 120 °C gehalten.

b) Ungesättigtes Amin-epoxidharzgemisch

322 g Bindemittellösung A2, 83 g Bindemittellösung A3a) und 77 g Methoxypropanol werden 15 Minuten lang durch gutes Rühren vermischt.

Festkörper: 63,9 % (40 Minuten 180 °C)
Hydrierjodzahl: 10 (Festharz)

Vernetzungsmittel B1)

Gemäß Beispiel B 3 der DE-A-35 41 140, Seite 8, werden 216 g Malonsäuredibutylester und 1 g Natriummethylat bei 60 °C mit 190 g eines durch Trimerisierung von Hexamethylendiisocyanat erhaltenen Isocyanurat - Polyisocyanates (NCO-Gehalt = 21 %) versetzt.
Nach Erreichen eines Gehaltes an freien Isocyanatgruppen von weniger als 0,5 % werden 174 g Methoxypropanol (statt Xylol) zugeführt und filtriert.

Festkörpergehalt: 70 %
C-H-Äquivalentgewicht: 555

Beispiel 1

In einer Perlmühle werden 250 g Bindemittellösung A1, 110 g Methoxypropanol, 6,4 g Ameisensäure (50 %-ig in Wasser), 5,5 g Ruß und 44,5 g Kaolin 40 Minuten lang angerieben.
Danach wird dem Mahlgut 6 g Ameisensäure (50 %-ig in Wasser) und 107,2 g des Vernetzungsmittels B1 unter dem Dissolver zugesetzt. Danach werden unter Rühren langsam 1470,4 g vollentsalztes Wasser zugegeben.

Festkörper: 13,9 % (30 Minuten 180 ° C9

MEQ-Wert: 45 (mmol Ameisensäure/l00 g Festharz)

Auf zinkphosphatiertem Stahlblech wird bei einer Badtemperatur von 30 ° C 2 Minuten mit 110 V beschichtet. Nach Abspülen mit Wasser und Minuten langem Einbrennen bei 120 ° C entsteht ein Trockenfilm von 20 µm. Der Film zeigt nach 100 MEK-Rubs, d.h. 100 Doppelhübe, die unter 1 kg Belastung mit Methylethylketon getränkter Watte durchgeführt werden, keine sichtbare Veränderung.

Beispiel 2

In einer Perlmühle werden 264 g Bindemittellösung A2, 90 g Methoxypropanol, 10 g Ameisensäure (50 %-ig in Wasser), 7 g Ruß und 61,5 g Kaolin 40 Minuten lang angerieben.
Danach wird dem Mahlgut 147 g Bindemittellösung A2, 28 g Methoxypropanol, 9,3 g Ameisensäure (50 %-ig in Wasser) und 171,2 g des Vernetzungsmittels B1 unter dem Dissolver zugesetzt. Danach wird das Konzentrat mit vollentsalztem Wasser auf insgesamt 3 Liter gebracht.

Auf zinkphosphatiertem Stahlblech wird bei einer Badtemperatur von 30 ° C 2 Minuten mit 160 V beschichtet. Nach Abspülen mit Wasser und 30 Minuten langem Einbrennen bei 100 ° C entsteht ein Trockenfilm von 18 µm. Der Film zeigt nach 100 MEK-Rubs (Beschreibung s.o.) keine sichtbare Veränderung.

Beispiel 3

482 g Bindemittellösung A3 und 15,3 g Ameisensäure (50 %-ig in Wasser) werden mit 135,6 g des Vernetzers B1 innig vermischt und unter Rühren mit vollentsalztem Wasser auf ein Volumen von 3 Litern gebracht.

Festkörper: 10,7 % (30 Minuten 180 ° C)

MEQ-Wert: 49,3 (mmol Ameisensäure/l00 g Festharz)

Zinkphosphatierte Stahlbleche werden wie oben beschrieben beschichtet und bei Temperaturen von 80, 90, 100 und 110 ° C eingebrannt. Die Einwirkung von Aceton hinterläßt nach 1 Minute keinen Angriff auf dem bei 100 ° C eingebrannten Film.

Beispiel 4

Wie Beispiel 1, aber mit folgenden Mengen:
250 g Bindemittellösung A1, 100 g Methoxypropanol, 11 g Ameisensäure (50 %-ig in Wasser), 5,5 g Ruß, 8,2 g einer 78 %-igen Bleisilikatpaste, 36,3 g Kaolin, 8,0 g Octa Soligen Pb 31 und 107,2 g Vernetzungsmittel B1.
Es wird wie unter Beispiel 1 verfahren und anschließend mit vollentsalztem Wasser auf 2 Liter verdünnt.

Festkörper: 14,7 % (30 Minuten 180 ° C)

MEQ-Wert: 46 (mmol Ameisensäure/100 g Festharz)

Der bei 140 V, 30 ° C 2 Minuten lang aufgebrachte und 30 Minuten bei 120 ° C getrocknete Film von 21 µm Trockenfilmdichte verhält sich gegenüber MEK-Rubs wie der unter Beispiel 1.

Beispiel 5

325 g Bindemittellösung A2, 42 g eines butanonoximverkappten Isophorondiisocyanats, 107,1 g des Vernetzungsmittels B1 und 13,2 g Ameisensäure (50 %-ig in Wasser) werden innig vermischt und unter Rühren mit vollentsalztem Wasser auf ein Volumen von 3 Litern gebracht.

Festkörper: 10,2 % (3O Minuten 180 ° C)

MEQ-Wert: 48 (mmol Ameisensäure/l00 g Festharz)

Beschichtungen wie unter Beispiel 3 beschrieben ergeben bei einer Einbrenntemperatur von 120 bis 130 ° C MEK-feste Filme, die auf einer chromsäuregespülten Niedrigzinkphosphatierung nach 504 h Salzsprühtest DIN 50017 eine Unterwanderung am Schnitt von kleiner als 2 mm aufweisen (Auswertung nach DIN 50021).

**Patentansprüche**

1. Kathodisch abscheidbares wäßriges Elektrotauchlack-Überzugsmittel, das (A) ein oder mehrere Kunstharz-Bindemittel mit Aminogruppen enthält, welche durch Protonisieren mit Säuren wasserlöslich bzw. wasserdispergierbar gemacht werden können, beim Einbrennen damit reagierende Vernetzungsmittel (B) sowie gegebenenfalls Pigmente, Korrosionsinhibitoren, Antikratermittel, Lackhilfsmittel, Lackbindemittel, Weichmacher, Katalysatoren und organische Lösungsmittel enthält, **dadurch gekennzeichnet,** daß es als Komponente
   (A) 90 bis 50 % Massenanteil, bezogen auf den Gesamtanteil des Kunstharz-Bindemittels, von einem oder mehreren Polykondensations-, Polymerisations- und/oder Polyadditionsharzen, wobei das Harz oder im Falle des Vorliegens mehrerer Harze deren Gemisch
      a) eine zahlenmittlere Molmasse (Mn) von 700 bis 10000 hat,
      b) $1{,}2 \cdot 10^{23}$ bis $21{,}7 \cdot 10^{23}$ seiten- oder endständige Doppelbindungen pro 1000 g enthält, entsprechend einer Hydrierjodzahl von 5 bis 90,
      c) gegebenenfalls primäre und/oder sekundäre Hydroxylgruppen enthält, entsprechend einer Hydroxylzahl von 0 bis 450 mg KOH/g Harz und
      d) tertiäre Aminogruppen entsprechend einer Aminzahl von 30 bis 450 mg KOH/g Harz aufweist,
   als Komponente
   (B) 10 bis 50 % Massenanteil eines oder mehrerer Vernetzungsmittel, die Verbindungen mit Methantricarbonsäureamideinheiten der Formel

   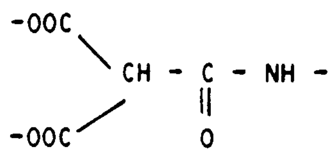

   sind, die im Molekül durchschnittlich mindestens 2 Gruppen mit aktiven H-Atomen enthalten und von einem Umsetzungsprodukt eines Mono- oder Polyisocyanates mit einem Malonsäurederivat abgeleitet sind, und
   als weitere Komponente
   (C) 0 bis 10 % Massenanteil eines oder mehrerer verkappter Di- und/oder Polyisocyanate enthält.

2. Überzugsmittel nach Anspruch 1, dadurch gekennzeichnet, daß es 90 bis 50% Massenanteil der Komponente A und 10 bis 50 % Massenanteil der Komponente B enthält.

3. Überzugsmittel nach Anspruch 1, dadurch gekennzeichnet, daß es 65 bis 80 % Massenanteil der Komponente A und 20 bis 35 % Massenanteil der Komponente B enthält.

4. Überzugsmittel nach Anspruch 3, dadurch gekennzeichnet, daß es bis zu 10 % der Komponente C enthält.

5. Überzugsmittel nach Anspruch 1, 2, 3 oder 4, dadurch gekennzeichnet, daß die seiten- oder endständigen Doppelbindungen zur Michael-Addition geeignete Doppelbindungen sind.

6. Überzugsmittel nach einem der Ansprüche 1 - 5, dadurch gekennzeichnet, daß die seiten- oder endständigen Doppelbindungen durch Addition von Acrylsäure oder Methacrylsäure oder deren Derivaten an Epoxidgruppen in die Komponente (A) eingeführt wurden.

7. Verwendung der Überzugsmittel nach einem der Ansprüche 1 bis 4 zur kathodischen Abscheidung aus einem Lackbad auf elektrisch leitenden Oberflächen.

**Claims**

1. A cathodically depositable aqueous electrocoating agent that contains (A) one or several synthetic resin binders with amino groups, that can be made water soluble or water dispersible by protonation with acids, (B) cross-linking agents reacting therewith on stoving, and optionally pigments, corrosion inhibitors, anti-crater agents, lacquer additives, lacquer binders, plasticizers, catalysts and organic

solvents, characterized in that it contains as component

(A) 90 to 50 % by weight, relative to the total synthetic resin binder, of one or several polycondensation, polymerization and/or polyaddition resins, the resin, or if several resins are present, their mixture

(a) having a number average molecular weight (Mn) of 700 to 10,000,

(b) containing 1.2 x $10^{23}$ to 21.7 x $10^{23}$ lateral or terminal double bonds per 1000 g, corresponding to a hydrogenation iodine number of 5 to 90,

(c) optionally containing primary and/or secondary hydroxyl groups, corresponding to a hydroxyl number of 0 to 450 mg KOH/g resin and

(d) having tertiary amino groups corresponding to an amine number of 30 to 450 mg KOH/g resin,

as component

(B) 10 to 50 % by weight of one or several cross-linking agents that are compounds with methanetricarboxylic acid amide units of the formula

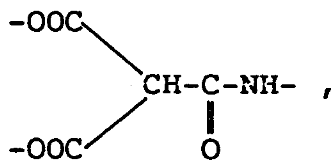

that contain in the molecule on average at least 2 groups with active H atoms, and are derived from a reaction product of a mono- or polyisocyanate with a malonic acid derivative, and

as further component

(C) 0 to 10 % by weight of one or several capped di-and/or polyisocyanates.

**2.** A coating agent according to Claim 1, characterized in that it contains 90 to 50 % by weight of component A and 10 to 50 % by weight of component B.

**3.** A coating agent according to Claim 1, characterized in that it contains 65 to 80 % by weight of component A and 20 to 35 % by weight of component B.

**4.** A coating agent according to Claim 3, characterized in that it contains up to 10 % of component C.

**5.** A coating agent according to Claim 1, 2, 3 or 4, characterized in that the lateral or terminal double bonds are suitable double bonds for the Michael addition.

**6.** A coating agent according to one of Claims 1 to 5 characterized in that the lateral or terminal double bonds are introduced by addition of acrylic acid or methacrylic acid or their derivatives to epoxide groups in component (A).

**7.** The use of the coating agent according to one of Claims 1 to 4 for cathodic deposition from a lacquer bath onto electrically conductive surfaces.

## Revendications

**1.** Moyen de revêtement par trempage électro-phorétique aqueux déposable cathodiquement, qui (A) contient un ou plusieurs liants en résine synthétique avec des groupes amino qui peuvent être rendus solubles ou dispersables dans l'eau par protonisation avec des acides, des moyens de réticulation réagissant avec eux à la cuisson (B) contient éventuellement aussi des pigments, des inhibiteurs de corrosion, des moyens anti-cratères, des adjuvants de laque, des liants de laque, des adoucissants, des catalyseurs et des solvants organiques,

**caractérisé** en ce qu'il contient comme composants :

(A) 90 à 50% en masse, rapportés à la part totale du liant en résine synthétique, d'une ou plusieurs résines de polycondensation, polymérisation, et/ou polyaddition, la résine, ou, dans le cas de l'existence de plusieurs résines, leur mélange ayant

a) une masse molaire (Mn) moyenne de 700 à 1000,

b) contenant 1, 2 . $10^{23}$ à 21,7 . $10^{23}$ de doubles liaisons latérales ou de fin de chaîne pour 1000

g, correspondant à l'indice diode hydraté de 5 à 90,

c) contient éventuellement des groupes hydroxyles primaires et/ou secondaires correspondant à une indice d'hydroxyle de 0 à 450 mg, de KOH/g de résine et

d) comporte des groupes amino tertiaires correspondant à un indice d'amine de 30 à 450 mg de KOH/g de résine comme composants.

(B) 10 à 50% en masse d'un ou plusieurs agents de réticulation, les liaisons avec des unités de méthane-tricarbon-acide-amine de formule

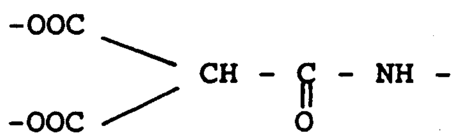

qui contiennent dans la molécule en moyenne au moins deux groupes avec atomes H actifs et sont dérivés d'un produit de transformation d'un mono ou polyisocynanate avec un dérivé d'acide malonique, et

comme autres composants

(C) contient 0 à 10% en masse d'un ou plusieurs di et/ou polyisocyanates cachés.

**2.** Moyen de revêtement selon la revendication 1, caractérisé en ce qu'il contient 90 à 50% en masse des composants A et 10 à 50% en masse des composants B.

**3.** Moyen de revêtement selon la revendication 1, caractérisé en ce qu'il contient 65 à 80% en masse des composants A et 20 à 35% en masse des composants B.

**4.** Moyen de revêtement selon la revendication 3, caractérisé en ce qu'il contient jusqu'à 10% des composants C.

**5.** Moyen de revêtement selon la revendication 1, 2, 3 ou, 4, caractérisé en ce que les doubles liaisons latérales ou de fin de chaîne sont des doubles liaisons appropriées à l'addition de Michael.

**6.** Moyen de revêtement selon l'une des revendications 1 à 5, caractérisé en ce que les doubles liaisons latérales ou fin de chaîne ont été introduites par addition d'acide acrylique ou d'acide méthacrylique ou de leurs dérivés à des groupes époxy dans les composants (A).

**7.** Utilisation des moyens de revêtement selon l'une des revendications 1 à 4 pour la déposition cathodique à partir d'un bain de laque sur des surfaces conductrices de l'électricité.